## Europäisches Patentamt

## European Patent Office

## Office européen des brevets

(11) Publication number: **0 205 678**
**B1**

# EUROPEAN PATENT SPECIFICATION

(45) Date of publication of patent specification: **11.10.89**

(51) Int. Cl.⁴: **B 65 G 65/36**

(21) Application number: **85302820.7**

(22) Date of filing: **23.04.85**

(54) **Reducing hoop stress in silos.**

(43) Date of publication of application:
**30.12.86 Bulletin 86/52**

(45) Publication of the grant of the patent:
**11.10.89 Bulletin 89/41**

(84) Designated Contracting States:
**DE FR GB NL**

(56) References cited:
**FR-A-1 276 735**
**SU-A- 175 887**

(73) Proprietor: **SOUTH AUSTRALIAN CO-OPERATIVE BULK HANDLING LIMITED**
**123 South Terrace**
**Adelaide South Australia (AU)**

(72) Inventor: **Johinke, Bruce Leslie**
**28 Dequetteville Terrace**
**Kent Town South Australia (AU)**

(74) Representative: **Wells, Keith Raymond et al**
**POTTS, KERR & CO. 15 Hamilton Square**
**Birkenhead Merseyside L41 6BR (GB)**

Courier Press, Leamington Spa, England.

# Description

This invention relates to a silo cell including hoop stress reducing means and is particularly concerned with silos which contain grain, or other bulk solids.

## Background of the invention

Many silos which were built before the dynamics of discharge were fully understood, were designed for static loading, but it has been shown that material pressures exerted on the cell walls increases by a factor of up to about two and a half when the outloading valve is opened and material begins to move.

The opening of the valve removes vertical support from the material directly above it and the stress field changes from "peaked", with lines of major stress vertical, or near vertical, to "arched" with lines of major stress arching across the cell.

The "arched" stress field occupies a conical zone which diverges upwardly. At the point where this conical zone intersects the cell walls, the large lateral component of force causes a high loop stress in the cell walls. This stress exceeds the static stress by a factor of up to two and a half, and is often large enough to cause overstressing and cracking of cell walls.

The cost of replacement of a silo is prohibitive, and the main object of this invention is to provide improvements whereby the hoop stress can be substantially reduced.

Several methods are available to strengthen the cylindrical walls of an upstanding silo. One widely used (but basically unsound) method, is the repair of bulged areas, but even this is expensive. The second alternative is the use of external strapping on the external surfaces of external cells only of a group of silos, but this is many times more expensive than the cost of local bulge repairs. Another possibility which has been examined has been the use of a steel liner spirally wound within a silo to lie against the inner surface of a concrete wall but this is even more expensive than the external strapping. The other alternative (apart from this invention) is the use of a concrete liner constructed for the full height of the cell and within an old cell, but the cost of this is so great that it is not viable.

## State of the art

This problem has already been the subject of various studies and the following references are pertinent:—

(a) Arnold, P. C., McLean, A. G. and Roberts, A. W. Bulk Solids: Storage, Flow and Handling.

Tunra Bulk Solids Handling Research Associates.

(b) Jenike, A. W. Gravity Flow of Bulk Solids, Bulletin 108, Utah Engineering Experiment Station, University of Utah.

(c) Riembert, M. & A. Silos, Theory and Practice, Trans Tech Publications, 1976.

(d) Warner, R. F. Strengthening, Stiffening and Repair of Concrete Structures, Iabse Surveys S17/81.

(e) Riembert, A. U.S. Patent 4,372,466.

(f) Riembert, A. French Patent No. FR—A—1276735.

The reader's attention is drawn to a central tube known as an "anti-dynamic tube" proposed by Riembert, and this employs a tube containing a plurality of apertures throughout its length, placed at the cell centre and extending for full cell height, and supported by guy wires fixed to the cell wall. In principle, the tube and portholes are intended to ensure that the grain flows into the tube only close to the grain surface, thus emptying the cell from the top downwards. No mass flow occurs, and no switch pressures are generated against the cell walls. Although there is available supporting literature, there appear to be some practical problems. The small portholes are liable to blockage, thus causing unsymmetrical flow which in turn generates large lateral forces on the tube with the possibility of collapse. If flow into the tube is able to occur at lower tube levels than close to the free grain surface, there will be mass flow within the bin.

The Reimbert U.S. Patent 4,372,466 also disclosed use of a central tube (5) which had imperforate walls, and was separately valved from the rest of the silos. Although this arrangement is capable of effective use, it is also capable of incorrect use, and if for example, the second discharge orifice (4) is opened before the first discharge orifice (3), the arrangement is ineffectual, and high stresses can be imparted to the silo walls.

In French Patent Specification No. FR—A—1276735, there is described a silo cell which has upstanding cylindrical walls and a grain tube having an open upper end located centrally therein. The grain tube extends upwardly from the base of the cell and extends vertically part-way up the cell. An aperture is provided at the lower end of the tube and a restrictor is disposed at the opening of the silo cell. Such prior document also discloses means for supporting the upper end of the tube at a spacing from the cylindrical walls.

Many silo cells have a height to diameter ratio of about three, and the hoop stress is excessive only when the ratio exceeds about 1.5 (depending upon the grain used and its moisture content), and this invention seeks to resolve the excessive hoop stress by dividing a silo cell into a plurality of notional cells one above the other.

## Objects of the invention

The present invention seeks to provide a silo cell which is generally of the type described in the above-mentioned French patent specification but which additionally incorporates means for reducing hoop stress in the silo cell, which features are both economical and feasible.

## Brief summary of the invention

Briefly in this invention the hoop stress in a silo is reduced by positioning an open ended tube in the lower part of a silo cell, the wall of the open ended tube having apertures near the silo base allowing the entry of granular material and a restrictor (or choke) below the apertures, restricting the material flow, so that when the silo cell first discharges the material, all of that discharge is through the upper end of the tube, downwardly through the tube, and outwardly from the silo cell through valve means beyond ghe lower end of the tube and restrictor. The restrictor below the tube apertures ensures that, during that initial discharge, the tube remains full and granular material does not flow through those apertures from the silo cell.

With respect to the prior art reflected by FR—A—1276735, which discloses a silo cell including hoop stress reducing means the cell having upstanding cylindrical walls and a discharge opening, said hoop stress reducing means comprising a grain tube having an open upper end located centrally within the silo which is upstanding from the base thereof and which extends vertically part-way up the cell, aperture means provided at the lower end of the tube, a restrictor disposed at the discharge opening of the silo cell and support means for supporting the upper end of the tube at a spacing from the cylindrical walls of the cell, the present invention is characterised in that said aperture means comprises a plurality of apertures, said apertures extending through the wall of the tube and being formed solely in the lower end region thereof, the apertures being symmetrically disposed about the central vertical axis of the tube, the grain tube being imperforate between said apertures and the tube upper end, in that the restrictor is disposed in the tube beneath the apertures for restricting flow through the tube and in that valve means are located at the lower end of the tube below the restrictor.

The zone of granular material flow causing dynamic forces when grain begins to move upon opening of the outloading valve, is approximately conical in shape and will have a variation of included cone angle dependent on the material type used, and the environmental conditions within the silo cell. However the highest pressure which would otherwise be imparted to the silo walls, will be avoided if this cone extends through the surface of the grain, or to the walls near that surface, and not at the interface between the grain and the inner surface of the silo cell wall at an effective distance below the surface. Since the cone angle is likely to be small and its point of intersection with the cell wall relatively elevated, it is usually sufficient to have within a silo cell a tube with apertures at the base only, and this greatly reduces the incidence of very high pressure if the upper part of the silo is emptied first before any material flow or emptying begins in the lower part. However, for very tall, narrow, silos, a tube may require further apertures, for example at a height of 1.5×silo diameter above the base.

The lateral forces imposed on the tube can be considerable in the event of asymmetrical flow of the material, and it is necessary to limit the possibility of such flow by having the tube apertures symmetrical, and most bulk of the tube body centrally placed within the silo cell, but nevertheless to resist those forces it is desirable that support stays should be of sufficient cross-sectional area and of sufficiently high tensile material that such loads will be fully resisted with a minimum of further damage to the walls of the silo.

## Brief description of the drawings

Embodiments of the invention are described hereunder in some detail with reference to and are illustrated in the accompanying drawings in which:

Fig. 1 illustrates a silo cell showing how grain will discharge in a conical or funnel manner,

Fig. 2 shows diagramatically the modification of a silo cell according to this invention,

Fig. 3 is a section through a cell showing the details of construction and the open ended tube therein,

Fig. 4 is a section on line 4—4 of Fig. 3 which indicates the manner in which the support stays are utilised; and

Fig. 5 shows the construction of the open ended tube.

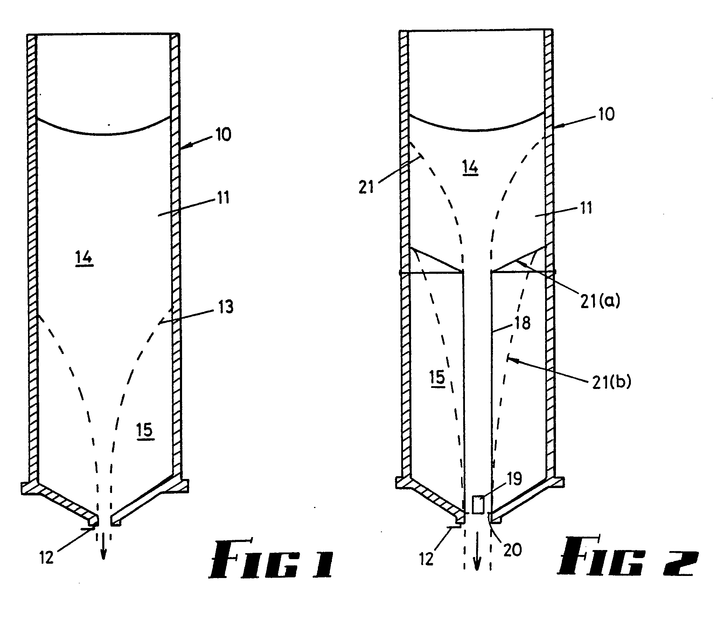

Referring first to Fig. 1 which is representative of prior art, a silo cell 10 contains grain 11 which discharges through a gate valve 12 shown diagrammatically, and in so doing there is an interface 13 between the flowing grain 14 and the stationary grain 15, and it is the existence of this interface which causes hoop stresses in the walls of silo 10 which are in the order of two and a half times greater than the static stresses for which many silos have been designed.

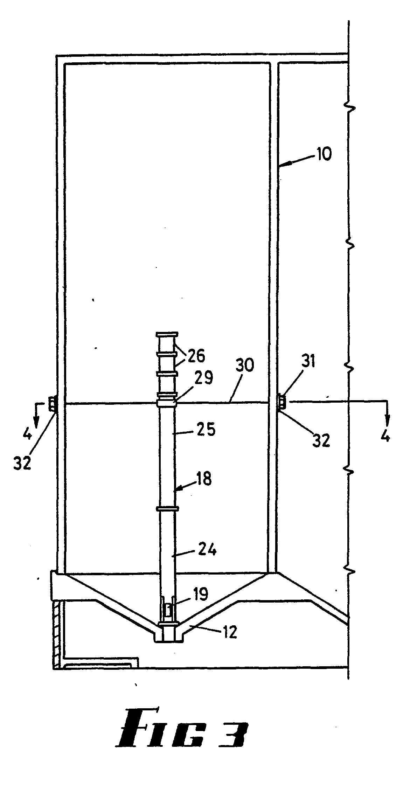

Fig. 2 illustrates a first embodiment of this invention. As will be seen from Fig. 2, an open ended tube 18 is imperforate except for apertures 19 at its lower end (there being four in all) and these apertures 19 are placed above a restrictor or choke, in this embodiment choke plate 20, being an annular plate or moveable diaphragm at the lower end of the open ended tube 18, and located above the gate valve 12.

The existence of a choke plate 20 reduces the likelihood of grain flowing through apertures 19 until the grain above the open ended tube 18 has discharged.

During the discharge of the flowing grain 14 above the tube 18, an interface 21 develops but this is so high in the cell that it is located in a low pressure area and will not impart excessive hoop stress to the cell walls. In some instances interface 21 will pass through the surface of the grain and thereby impart no dynamic forces at all to the cell walls. However once the flow has taken place and grain ceases to discharge from above the tube 18 it will adopt an elevated conical surface (21a) above the top of the tube and, further outward flow will then take place through apertures 19 and by this time the pressure will be reduced so that excessive hoop stresses will not be imparted to the silo cell walls.

As shown in Fig. 3, the open ended tube 18 comprises a lower portion 24, an upper portion 25 and a plurality of upper extensions 26 which can be arranged so that the effective length of the open ended tube 18 can be adjusted for optimum working conditions. It will be seen that the tube 18 even with extensions does not extend as high as half way up the cell 10.

Near the upper end of the upper portion 25 of tube 18, there is provided a band 29 which extends around it and this is held fast to the walls of cell 10 by support stays 30 which extend through the walls and are secured with buts 31 which abut bearer plates 32.

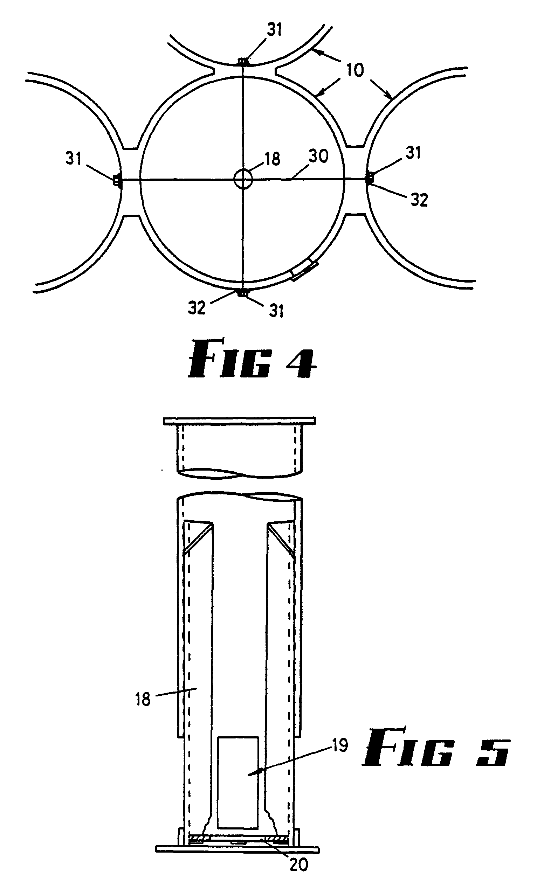

Figs. 4 and 5 show some details of construction of silos which embody the invention. Fig. 4 shows how the stays 30 are best secured to a silo which is part of a group of silos. Fig. 5 shows details of construction of the lower end of grain tube 18.

Operation is entirely automatic, and danger of unsymmetrical flow or other malfunction is slight. The invention is easily applied to existing silos with a minimum of rework.

## Claims

1. A silo cell including hoop stress reducing means the cell (10) having upstanding cylindrical walls and a discharge opening, said hoop stress reducing means comprising a grain tube (18) having an open upper end located centrally within the silo which is upstanding from the base thereof and which extends vertically part-way up the cell, aperture means provided at the lower end of the tube, a restrictor disposed at the discharge opening of the silo cell and support means for supporting the upper end of the tube at a spacing from the cylindrical walls of the cell, characterised in that said aperture means comprises a plurality of apertures (19), said apertures extending through the wall of the tube and being formed solely in the lower end region thereof, the apertures being symmetrically disposed about the central vertical axis of the tube, the grain tube being imperforate between said apertures and the tube upper end, in that the restrictor (20) is disposed in the tube beneath the apertures for restricting flow through the tube and in that valve means (12) are located at the lower end of the tube below the restrictor.

2. A silo cell as claimed in claim 1 characterised in that said support means comprise stays (30) radiating from said grain tube, and anchor means (31, 32) anchoring said stays to the grain silo wall.

3. A silo cell as claimed in claim 1 characterised in that a band (29) extends around and is locked to the wall of the silo, said support means comprising stays (30) radiating from the open ended tube to the band.

4. A silo cell as claimed in any preceding claim characterised in that said valve comprises a gate valve (12) disposed at the lower end of the silo vertically beneath said open ended tube.

5. A silo cell as claimed in any preceding claim characterised in that said open ended tube comprises upper extensions (26).

## Patentansprüche

1. Silozelle mit Umfangsspannungs-Reduziermitteln, wobei die Zelle (10) aufrechte Zylinderwandungen und eine Entnahmeöffnung hat und die Umfangsspannungs-Reduziermittel umfassen: ein Getreiderohr (18) mit einem mittig im Silo angeordneten offenen Oberende, wobei das Getreiderohr von der Silobasis aufwärts und vertikal über einen Teil der Zellenhöhe verläuft, am Unterende des Rohrs vorgesehene Öffnungen, eine an der Entnahmeöffnung der Silozelle angeordnete Drosselvorrichtung, und Stützmittel zur Abstützung des Oberendes des Rohrs in einem Abstand von den Zylinderwandungen der Zelle, dadurch gekennzeichnet, daß die Öffnungen eine Mehrzahl Öffnungen (19) umfassen, die die Rohrwand durchsetzen und ausschließlich im unteren Endbereich des Rohrs ausgebildet sind, wobei die Öffnungen symmetrisch um die vertikale Mittenachse des Rohrs angeordnet sind und das Getreiderohr zwischen diesen Öffnungen und dem Rohroberende keine Öffnungen aufweist, daß die Drosselvorrichtung (20) im Rohr unterhalb der Öffnungen angeordnet ist, um eine Strömung durch das Rohr zu drosseln, und daß am Unterende des Rohrs unter der Drosselvorrichtung ein Absperrorgan (12) angeordnet ist.

2. Silozelle nach Anspruch 1, dadurch gekennzeichnet, daß die Stützmittel vom Getreiderohr radial ausgehende Streben (30) sowie die Streben mit der Getreidesilowand verankernde Befestigungsmittel (31, 32) umfassen.

3. Silozelle nach Anspruch 1, dadurch gekennzeichnet, daß um das Rohr ein an der Silowand festgelegtes Band (29) verläuft, wobei die Stützmittel Streben (30) sind, die radial von dem offenendigen Rohr zu dem Band verlaufen.

4. Silozelle nach einem der vorhergehenden Ansprüche, dadurch gekennzeichnet, daß das Absperrorgan ein Absperrschieber (12) ist, der am Unterende des Silos vertikal unter dem offenendigen Rohr angeordnet ist.

5. Umfangsspannungs-Reduziermittel nach einem der vorhergehenden Ansprüche, dadurch gekennzeichnet, daß das offenendige Rohr obere Verlängerungen (26) umfaßt.

## Revendications

1. Une cellule de silo comportant un dispositif de réduction de la contrainte périphérique, la cellule (10) présentant des murs verticaux cylindriques et une ouverture de décharge, ledit dispositif réducteur de contraintes périphériques comportant un tube pour grain (18) présentant une extrémité supérieure ouverte, et disposé à l'intérieur du silo qui est vertical à partir de la base de celui-ci et qui se prolonge verticalement vers le haut dans la cellule, un dispositif d'ouverture prévu à l'extrémité inférieure du tube, un limiteur disposé à l'ouverture disposé à l'ouverture d'évacuation de la cellule du silo et un dispositif de support pour supporter l'extrémité supérieure du tube en relation d'espacement à partir des parois cylindriques de la cellule, caractérisée en ce que ledit dispositif d'ouverture comprend une pluralité d'orifices (19), lesdits orifices traversant la paroi du tube et étant ménagés uniquement dans la zone inférieure d'extrémité de celui-ci, les orifices étant symétriquement disposés autour de l'axe central vertical du tube, le tube pour grain étant imperforé entre lesdits orifices et l'extrémité supérieure du tube, en ce que le limiteur (20) est disposé dans le tube au-dessous des orifices afin de restreindre l'écoulement à travers le tube et en ce que un dispositif de vanne (12) est disposé à l'extrémité inférieure du tube au-dessous du limiteur.

2. Une cellule de silo telle que revendiquée dans la revendication 1, caractérisée en ce que ledit dispositif de support comprend des entretoises (30) rayonnant à partir dudit tube pour grain, et des moyens d'ancrage (31, 32) pour ancrer lesdites entretoises à la paroi du silo à grains.

3. Une cellule de silo telle que revendiquée dans la revendication 1, caractérisée en ce qu'un collier (29) s'étend autour de et est solidarisé à la paroi du silo, ledit dispositif de support comprenant des entretoises (30) rayonnant à partir du tube à extrémité ouverte vers le collier.

4. Une cellule de silo telle que revendiquée dans l'une des revendications précédentes, caractérisée en ce que ladite vanne comporte une vanne à obturateur (12) disposée à l'extrémité inférieure du silo verticalement au-dessous dudit tube à extrémité ouverte.

5. Dispositif de réduction des contraintes périphériques tel que revendiqué dans l'une quelconque des revendications précédentes, caractérisé en ce que le tube à extrémité ouverte comporte des prolongements supérieurs (26).

FIG 1

FIG 2

EP 0 205 678 B1

1

# FIG 3

**FIG 4**

**FIG 5**